## Europäisches Patentamt
## European Patent Office
## Office européen des brevets

(19)

(11) Numéro de publication: **0 057 150**
**B2**

(12)

# NOUVEAU FASCICULE DE BREVET EUROPEEN

(45) Date de publication du nouveau fascicule du brevet:
**10.01.90**

(51) Int. Cl.⁴: **F 02 B 23/00**

(21) Numéro de dépôt: **82400137.4**

(22) Date de dépôt: **25.01.82**

(54) **Chambre de combustion d'un moteur alternatif à combustion interne favorisant une turbulence rotative de combustion.**

(30) Priorité: **23.01.81 FR 8101317**

(43) Date de publication de la demande:
**04.08.82 Bulletin 82/31**

(45) Mention de la délivrance du brevet:
**10.04.85 Bulletin 85/15**

(45) Mention de la décision concernant l'opposition:
**10.01.90 Bulletin 90/2**

(84) Etats contractants désignés:
**AT CH DE FR GB IT LI NL SE**

(56) Documents cités:
**DE-A- 2 308 700**
**DE-A- 2 647 091**
**FR-A- 2 313 558**

(73) Titulaire: **Thery, Georges, 6, Place du Général Leclerc, F-93380 Pierrefitte (FR)**

(72) Inventeur: **Thery, Georges, 6, Place du Général Leclerc, F-93380 Pierrefitte (FR)**

(74) Mandataire: **Robert, Jean-Pierre et al, CABINET BEAU DE LOMENIE 55, rue d'Amsterdam, F-75008 Paris (FR)**

EP 0 057 150 B2

## Description

Dans la chambre de combustion d'un ensemble cylindre piston d'un moteur à combustion interne, on a constaté que le déplacement du front de flammes dans un mélange non turbulent s'effectue à une vitesse insuffisante. Cette combustion à vitesse trop lente entraîne de nombreux inconvénients parmi lesquels on citera, pour ce qui concerne les moteurs à allumage commandé, une tendance au cliquetis à pleine charge, une combustion incomplète à faible charge, une diminution du rendement quelle que soit la charge du moteur, etc. En outre, si le mélange combustible n'est pas homogène, la combustion est encore plus incertaine à sa totalité et les inconvénients susdits s'en trouvent aggravés.

On a tenté depuis nombreuses années d'apporter des perfectionnements aux chambres de combustion pour éliminer ces inconvénients.

C'est ainsi qu'il a été montré que pourvoir le piston d'une partie saillante permet d'éviter l'élévation de température de la portion encore non brûlée du mélange gazeux et ainsi de retarder son auto-inflammation et de réduire la tendance au cliquetis.

Dans le même esprit d'améliorer la combustion, il a été proposé d'associer une partie saillante de piston formant division de la chambre au point mort haut et une injection directe dans l'une des parties de la chambre ainsi constituée. Cette technique n'a cependant pas été mise en pratique industriellement car elle présente l'inconvénient de mettre en œuvre une injection directe coûteuse. Par ailleurs, l'élévation de pression dans la zone initiale de combustion est telle qu'après le point mort haut il se produit une projection brutale des gaz enflammés vers la seconde partie de la chambre avec réflexion de ces gaz sur la culasse engendrant une combustion irrégulière et une turbulence globalement ralentie parce qu'anarchique.

Dans un autre dispositif antérieur, on réalise un cloisonnement momentané de la chambre de combustion, au point mort haut au moyen d'une partie saillante du piston et d'une cavité dans la culasse; ladite partie saillante étant pourvue d'un orifice supérieur par lequel les gaz issus de la combustion initiale s'échappent en direction du centre de la chambre. La partie saillante étant mince à l'endroit de l'orifice susdit, constitue un point chaud très mal refroidi qui est source d'auto-inflammation du mélange rendant pratiquement impossible son application. Par ailleurs, l'orifice susdit est prévu très étroit pour étendre la flamme et entraîne donc la complication d'un réallumage.

Par le document FR-A 2 313 558 on connaît également une chambre de combustion délimitée par un piston à partie saillante et une culasse pourvue d'une cavité dans laquelle on admet séparément un mélange pauvre et un mélange riche, ce dernier du côté de la cavité. Au point mort haut, la chambre est également divisée et un orifice de communication est établi entre la zone de mélange riche et la zone de mélange pauvre. Cette disposition impliquant deux admissions séparées est de réalisation relativement coûteuse, notamment pour ce qui concerne l'agencement de culasse.

Enfin, on fera mention d'un agencement récent dans lequel on admet, dans une chambre de combustion, notamment au ralenti, un mélange qui, au moment de l'aspiration, balaye la chambre en tournant. On notera que cette turbulence rotative est le fait d'une alimentation tangentielle de la chambre de combustion par une ouverture étranglée ayant un effet de tuyère, qui est en parallèle avec l'alimentation principale. Cette disposition permet de créer une dynamique des gaz avant la combustion qui favorise cette dernière. On peut cependant penser qu'en fin de phase de compression cette dynamique est fortement atténuée et n'a qu'une incidence très faible sur le déroulement et la vitesse de la combustion.

En tout état de cause, elle ne concerne que le fonctionnement au ralenti du moteur.

L'invention est relative à une chambre de combustion – ou un moteur qui en comporte au moins une – permettant de créer un mouvement giratoire des gaz pendant la phase de combustion même, mouvement qui augmente de manière considérable la vitesse de combustion, ce à tous les régimes du moteur. Les moyens propres à l'invention qui seront explicités ci-après plus en détail sont applicables également aux chambres de combustion des moteurs Diesel, c'est-à-dire celles dans lesquelles la combustion est commencée avant la fin de l'injection de carburant.

En ce qui concerne les moteurs Diesel, on sait qu'il est nécessaire de réaliser un mélange air-combustible en proportion suffisante pour qu'il soit auto-inflammable. Il doit y avoir également une bonne répartition du combustible dans la chambre et il faut remédier à l'excès de richesse de la zone initiale de combustion au voisinage de laquelle débouche l'injecteur. Il est enfin nécessaire que la combustion de la charge résiduelle, c'est-à-dire de la portion de mélange qui subsiste imbrûlée lorsque la pression commence à décroître, soit rapide, car l'alésage est important.

La plupart des moteurs Diesel connus actuellement présentent des dispositions qui ne satisfont que partiellement à l'ensemble de ces exigences. Ainsi, ces dispositions n'intéressent en tout premier lieu que la formation du mélange auto-inflammable. Il s'agit, par exemple, de chambres fixes ménagées dans la culasse dans lesquelles est créée une turbulence avant combustion pour former ce mélange auto-inflammable. La combustion débutant à ce niveau, il se produit de fortes pertes de chaleur par la culasse avec son incidence sur le rendement. En outre, le balayage de ces cavités est très mal réalisé. Enfin, la turbulence dans la chambre de combustion est de type alternatif et donc d'effet limité. Dans d'autres dispositions, on réalise l'injection de combustible sur une surface chaude pour ainsi en provoquer l'évaporation. Il existe également des moteurs dans lesquels le combustible est projeté tangentiellement dans une cavité du piston ou de la culasse. Dans cette zone, on réalise une turbulence mécanique, dans le sens du jet injecté, d'air afin d'assurer une évaporation de combustible limitée pour constituer une certaine masse de mélange auto-inflammable pas trop importante pour éviter un cognement trop intense.

Cette turbulence devient faible pendant la compression quand débute l'injection et est pratiquement nulle au point mort haut du fait de l'effet de la compression et du déplacement des gaz qu'elle provoque vers la cavité. Ces moyens qui constituent un perfectionnement du point de vue du cognement n'apportent rien quant à la combustion proprement dite. Sur les diesels lents, on crée une importante quantité de mélange auto-inflammable, ce qui permet, compte tenu de l'importance des dimensions de la chambre de combustion, de réduire la durée totale du temps de combustion. Une telle auto-inflammation en masse crée un cognement très important auquel il est nécessaire de résister mécaniques et donc à construire des moteurs très lourds.

Aucune des dispositions connues ne propose de moyens efficaces pour améliorer la dynamique de la combustion afin d'en réduire le temps et de l'assurer la plus complète possible.

Les moyens spécifiques de l'invention permettent, comme pour les moteurs à allumage commandé, d'améliorer sensiblement le déroulement de la combustion dans un moteur Diesel et de fournir une solution globale à tous les impératifs de bon fonctionnement de ces moteurs.

A cet effet, l'invention concerne donc un moteur alternatif à combustion interne selon les revendications indépendantes 1 et 2.

Dans le cas d'un mélange combustible totalement admis dans la chambre avant le début de la combustion, ladite chambre comportant un organe d'allumage ponctuel, ledit organe d'allumage est placé dans ladite zone initiale de combustion au plus loin de ladite zone de liaison formant ledit orifice.

Dans le cas où au moins la fin de l'admission du combustible est concomitante au début de la combustion, c'est-à-dire dans un moteur Diesel, la partie de la zone de combustion (6) voisine de la zone susdite formant surface de liaison est située au voisinage de la soupape d'échappement, et l'admission par injecteur est orientée en direction de cette soupape. Le jet de combustible est alors divisé en une partie faible dirigée vers ladite soupape et une partie importante le long de la surface de la zone de combustion formée sur la saillie du piston, cette division est réalisée soit par le piston lors de sa course précédant le point mort haut, soit par un double jet d'injection.

Enfin, dans le cas d'une alimentation par injection on peut disposer un organe d'allumage, dans la zone de combustion initiale, au voisinage de la zone de liaison susdite.

Les moyens de l'invention ont pour effet principal d'engendrer une turbulence de combustion périphérique de forme tourbillonnaire dont les conséquences sont multiples tant pour ce qui concerne les moteurs à allumage commandé que pour ce qui concerne les moteurs Diesel et remédient aux imperfections constatées jusqu'à présent.

L'une de ces conséquences réside dans la diminution du temps de combustion. En effet, la turbulence susdite est constamment accélérée par le fait que les gaz en ignition issus de la combustion initiale provoquent un balayage périphérique de la chambre et mettent en mouvement les gaz encore imbrûlés en direction de la zone initiale.

En outre, la turbulence rotative assure une homogénéisation complète du contenu de la chambre.

On notera tout particulièrement que les moyens de l'invention engendrent une turbulence qui possède, après le point mort haut du piston, un effet de synergie que l'on appellera «effet boomerang». Ce résultat pourrait provenir du fait que les produits issus de la zone initiale de combustion sont dirigés vers cette zone à la périphérie de la chambre. Ces produits contiennent des produits de décomposition, c'est-à-dire d'un mélange soumis à une première décomposition sous l'effet du rayonnement des produits en combustion qui, dans cet état, présentent des facultés à s'enflammer beaucoup plus grandes que le mélange dans son état initial. Ainsi, donc, s'ajoute à la propagation orientée du front de flamme une propagation de décomposition des produits qui la précède. Ces produits décomposés sont ceux qui atteignent en premier lieu la zone initiale de combustion et on peut penser que, du fait de leur grande propension à s'enflammer, il se crée une seconde propagation du front de flamme remontant la projection des produits, à contre-courant de la turbulence. Ce phénomène conduit à constater que la vitesse de combustion est plus grande que la vitesse même de la turbulence.

La résultat de cette très rapide combustion est que celle-ci est pratiquement terminée au bout d'une vingtaine de degrés de tour de vilebrequin après le point mort haut, même lorsque le moteur fonctionne au ralenti. On voit donc que la combustion est terminée alors que la chambre est dans des conditions de pression voisines de la pression maximale. Il ne reste donc plus d'imbrûlés quand la pression commence à décroître, ce qui supprime la difficulté toujours rencontrée, surtout au ralenti, de brûler cette portion résiduelle alors que la pression de la chambre a décru.

Il faut enfin ajouter à cette turbulence rotative principale l'effet du mouvement de piston qui provoque, notamment après le point mort haut, un mouvement de gaz s'ajoutant à la turbulence rotative et permettant à la partie de mélange située au centre de la chambre d'être entraînée également en rotation.

Ces conséquences générales de la turbulence particulière engendrée par les moyens selon l'invention permettent de concevoir des moteurs particulièrement avantageux tant du point de vue de l'alimentation que du point de vue de leur technologie. Les perspectives qu'offre l'invention seront mieux comprises au cours de la description donnée ci-après à titre d'exemple purement indicatif et non limitatif qui permettra de dégager de nombreux avantages et caractéristiques secondaires de l'invention.

Il sera fait référence aux dessins annexés dans lesquels:

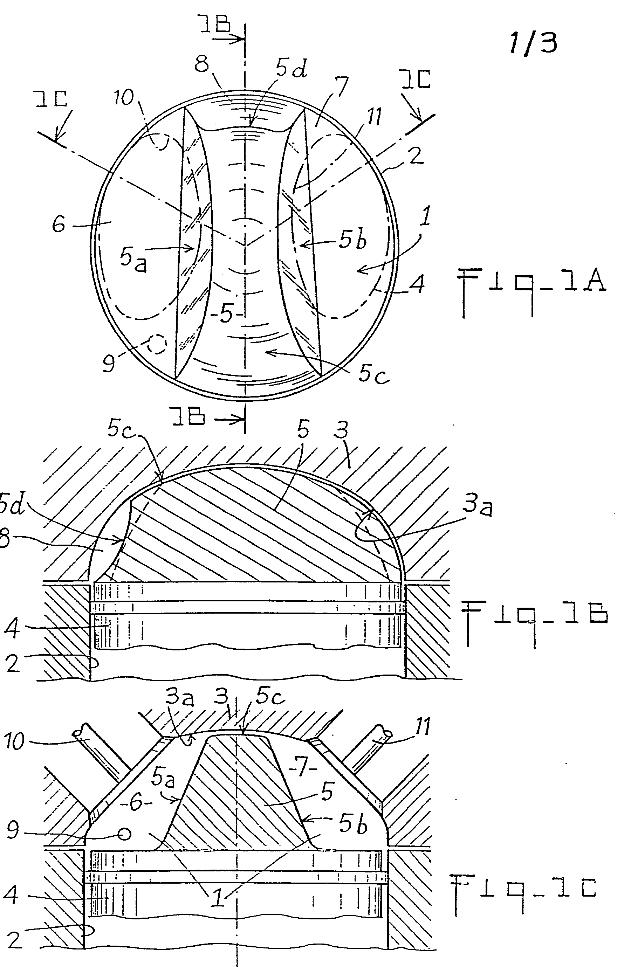

la figure 1A est un schéma illustrant le principe général de fonctionnement d'un moteur connu à double zone de combustion selon le préambule des revendications 1 et 2;

la figure 1B est une coupe partielle selon la ligne IB de la figure 1A;

la figure 1C est une coupe brisée selon la ligne IC de la figure 1A;

les figures 2A et 3B illustrent une variante de réalisation des figures 1A à 1C à culasse plate et dans une application Diesel ou semi-Diesel.

En se reportant tout d'abord aux trois premières figures, ont voit une chambre de combustion 1 délimitée par un cylindre 2, une culasse 3 et un piston 4 coulissant dans le cylindre. Le piston 4 porte une partie saillante 5 à son sommet. Cette saillie 5 est conformée de manière à comporter deux portions de surface 5a et 5b éloignées de la surface interne 3a de la culasse lorsque le piston est au point mort haut (comme représenté aux dessins). Ces portions 5a et 5b séparées par une troisième portion de surface 5c qui, elle, est voisine de la surface 3a lorsque le piston est au point mort haut. Cette troisième portion 5c comporte à la base de la partie saillante 5 et à sa périphérie une dépression 5d formant surface de liaison des deux premières portions de surface 5a et 5b au travers de la portion 5c. Ainsi, au point mort haut du piston, la portion 5a détermine avec la surface 3a de la culasse une zone de combustion initiale 6, tandis que la portion 5b détermine avec la surface 3a une zone 7 de détente des gaz issus de la combustion. La dépression 5d délimite avec la surface 3a un orifice de passage 8 des gaz provenant de la zone 6 vers la zone 7 lors de la combustion.

La zone 6 qui est la zone de combustion initiale comporte un organe d'allumage (bougie) 9. La soupape 10 contenue dans cette zone peut être la soupage d'échappement. Cette disposition sera préférée si le combustible possède une température d'auto-inflammation basse. La soupape 11 située dans la zone 7 est alors la soupape d'admission. Dans le cas où, en revanche, on désire utiliser un combustible à température d'auto-inflammation plus élevée, on placera la soupape d'admission 11 dans la zone 6 de combustion initiale avec l'organe d'allumage 9, la soupape d'échappement étant alors placée dans la zone 7.

Dans une variante de construction non représentée, on procède à l'admission par une seule soupape d'un double flux de mélanges. Un mélange pauvre est amené à la chambre par une tubulure principale d'admission, tandis qu'un mélange riche parvient à l'ouverture d'admission par une tubulure auxiliaire interne à la tubulure. Par ailleurs, lorsque le mélange pauvre est de l'air sans carburant, on peut disposer sur la tubulure un obturateur (du genre papillon) qui ferme cette tubulure lorsque le moteur fonctionne au ralenti. Le mélange riche seul est alors admis par la tubulure de section étroite donc avec une vitesse assez élevée et une turbulence avant combustion relativement importante, deux conditions pour augmenter la rapidité de la combustion et la rendre plus complète à faible charge.

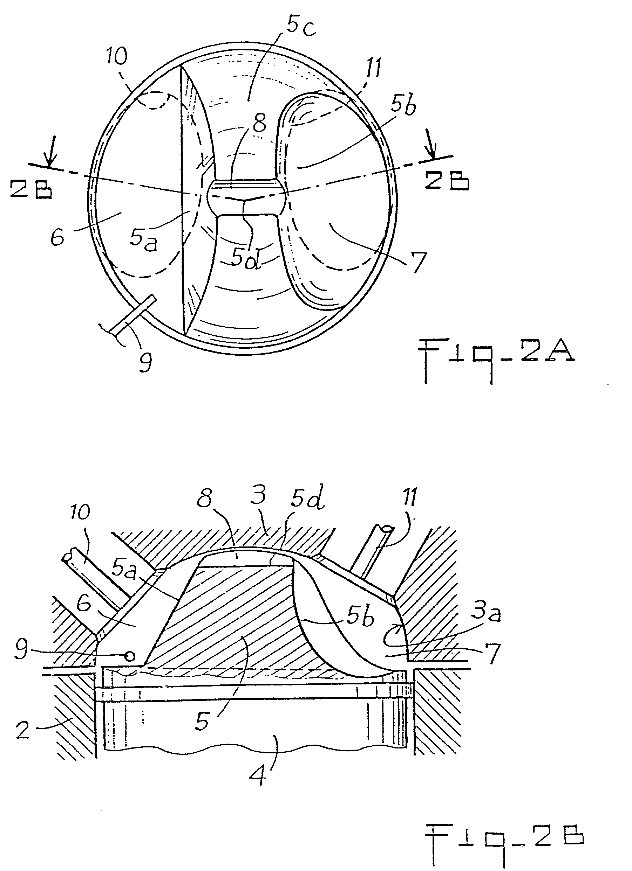

Sur les figures 2A et 2B, cette dernière étant une coupe selon la ligne 2B de la figure 2A, on retrouve l'essentiel des dispositions décrite ci-dessus avec les mêmes références mais dans une orientation différente. Ces figures illustrent un mode de réalisation dans lequel une turbulence rotative de combustion est créée, cette turbulence possédant un axe sensiblement orthogonal à celui du cylindre. On voit en effet que la surface 5d délimite le passage 8 au sommet de la partie saillante 5 et que la zone de détente 7 est conformée de manière à présenter dans le plan contenant sensiblement et l'axe vertical du cylindre et l'axe du passage 8 (c'est-à-dire le plan de la figure 2B), une trace en forme de ligne recourbée afin de guider les gaz issus de la zone initiale de combustion le long d'un trajet courbe qui vient se refermer sur lui-même au voisinage du passage 8 et qui engendre une turbulence rotative de combustion d'axe sensiblement perpendiculaire au plan susdit. On aura noté que l'organe 9 d'allumage sera alors situé au bas de la chambre de combustion initiale. En tout état de cause, l'organe d'allumage 9 sera situé dans la zone de combustion initiale en un endroit éloigné de l'orifice de passage des gaz vers la zone de détente.

Ainsi, le début de la combustion provoque la projection de produits de décomposition de la partie non enflammée de la zone initiale vers la zone de détente, isolée thermiquement du siège de la combustion initiale par la partie saillante. Ces produits de décomposition très facilement inflammables, sont ainsi partiellement neutralisés dans un premier temps, pour, après l'inversion du mouvement de piston, permettre à cette zone de détente, d'être gagnée très rapidement par toute la combustion.

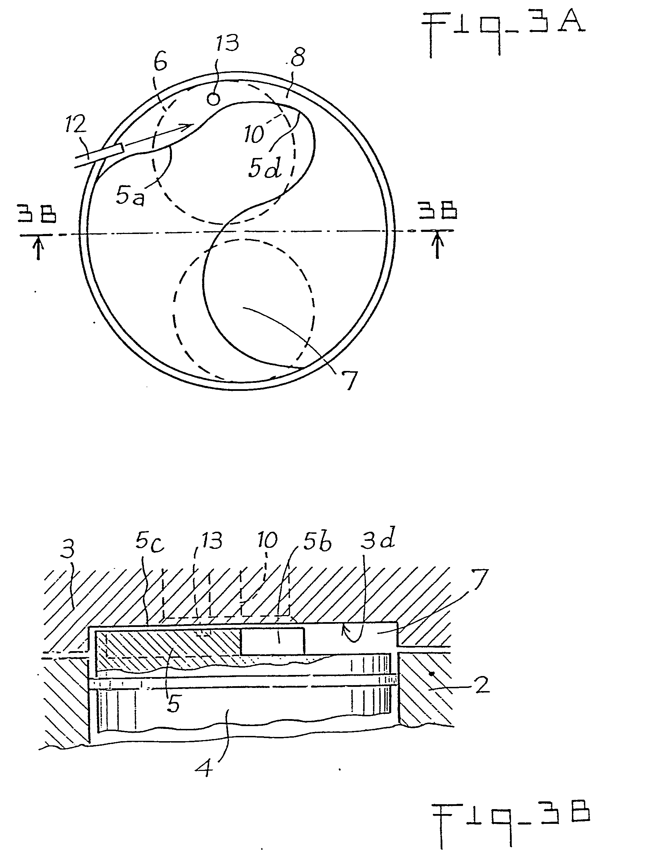

Par les figures 3A et 3B, on a représenté une variante de réalisation de l'invention la figure 3B étant une coupe le long de la ligne 3B de la figure 3A. Dans cette variante, on remarquera que la culasse 3 est plate, la partie saillante 5 du piston 4 l'étant également, les zones 6 et 7 étant disposées latéralement entre la partie saillante et la culasse. La zone 6 de combustion initiale est pourvue d'un injecteur 12 orienté de manière que le jet rencontre la partie de saillie du piston voisin de la zone 8 de communication. A ce moment, le jet d'injection est pulvérisé. Si, au-dessus de cette zone 8 et plutôt du côté de la zone 6, on a prévu de placer la soupape d'échappement 10, la partie de jet pulvérisé est échauffée par cette soupape et constitue une portion de mélange susceptible de s'auto-enflammer dans le cas d'un moteur Diesel. Cette portion de mélange est relativement petite ce qui permet d'avoir une inflammation initiale d'une petite masse, sans cognement (que l'on constate lorsqu'il y a une auto-inflammation d'une masse importante de mélange).

On peut imaginer, sans sortir du cadre de l'invention, que l'injecteur 12 permette l'alimentation par un jet principal dirigé vers la zone de détente et un jet secondaire de moindre débit dirigé vers ladite soupape d'échappement.

Par ailleurs, un organe 13 représente un élément réfractaire, mal refroidi qui constitue un point incandescent (soit du fait de son mauvais refroidissement, soit par effet Joule, soit encore par effet catalytique) pendant toute la durée du cycle. On notera dans ce cas que l'organe 13 est disposé au plus près de la zone 8 de passage ce qui permet un enrichissement de la zone initiale de combustion sans que la combustion elle-même propulse des imbrûlés dans la zone de détente.

L'inflammation d'une faible proportion de mélange peut être alors réalisée par le rayonnement de ce point incandescent dont l'action ne peut être que ponctuelle, à l'inverse de l'inflammation d'une quantité macrocosmique à laquelle on a recours jusqu'à présent pour diminuer les risques d'imbrûlés. Cette inflammation ponctuelle permet outre la suppression du cognement – notamment lors du fonctionnement au ralenti du moteur – d'alléger de manière importante ces moteurs, de diminuer le bruit, ce qui présente un grand intérêt pour les diesels lents et dans la possibilité offerte d'utiliser n'importe quel combustible et notamment l'alcool. La turbulence qui est engendrée par les moyens de l'invention permet alors de diminuer considérablement le temps de combustion, d'assurer l'autobalayage de la zone initiale et une combustion complète. Ainsi, tout en supprimant le cognement et en permettant la construction de moteurs légers, on réalise une combustion beaucoup plus rapide et complète dans les moteurs Diesel qui supprime tout rejet dans l'atmosphère de gaz imbrûlés et permet une réduction de consommation de plus de 10% par rapport aux moteurs (à chambre dans la culasse) les plus employés. Dans cette application aux moteurs Diesel, l'invention ouvre donc des perspectives très intéressantes étant donné les facteurs conjoncturels actuels quant au coût de la matière et des carburants.

La teneur en oxydes d'azote est diminuée en évitant, avant le point mort haut, une température trop élevée. Les produits d'une combustion incomplète sont également évités car la turbulence rotative de l'invention permet l'utilisation d'un mélange plus pauvre dont la combustion est assurée de manière complète (pas de rejet d'hydrocarbures ou d'oxydes de carbone).

On notera que l'invention permet une économie de consommation en essence essentiellement du fait de:

– l'accélération de la combustion à tous les régimes et notamment au ralenti. On sait en effet que la combustion est trop lente au ralenti et qu'en améliorant la turbulence uniquement au ralenti, et essentiellement avant le début de combustion, une disposition connue a permis de réaliser une économie d'environ 10%. Or, dans l'invention, la turbulence n'est pas limitée au seul fonctionnement au ralenti, mais concerne tous les régimes et toute la phase de combustion;

– la suppression de l'excès de richesse à pleine charge. On sait que la puissance maximale est obtenue classiquement – et de façon aberrante – par un enrichissement du mélange d'environ 20% qui doit assurer une accélération de la combustion; dans l'invention, on parvient à augmenter la vitesse de combustion sans avoir recours à cet artifice consommateur d'énergie;

– enfin, l'augmentation possible du taux de compression que permet l'invention.

En dernier lieu, on mentionnera dans les avantages de l'invention, la possibilité d'utiliser comme combustible un mélange globalement pauvre, par exemple à base d'une solution d'alcool. En effet, les moyens de l'invention générateurs de la turbulence rotative pallient largement la faible vitesse de propagation de la combustion dans ces mélanges. On pourra associer à cette admission de mélange pauvre, une admission (ou injection) pilote d'un hydrocarbure en faible quantité destiné à permettre une combustion finale du mélange pauvre plus rapide. On supprimera en outre pratiquement toute tendance au cliquetis du moteur et on pourra atteindre, pour les moteurs à allumage commandé, des taux de compression voisins de ceux des moteurs Diesel.

Pour les Diesels, l'allumage ponctuel supprime l'aberration technique que constitue un allumage commençant par un cognement et permet d'utiliser tout combustible y compris l'alcool, ce qui permet de disposer d'un parc de véhicules indépendant des approvisionnements en hydrocarbure.

On peut espérer que les moteurs, à allumage commandé ou Diesel construits en application de la présente invention, constitueront une sorte de nouvelle génération des moteurs à combustion interne qui présentera, par rapport aux moteurs actuels, un degré de pollution très faible, une consommation de produits pétroliers diminuée, un rendement amélioré et pour les Diesels, notamment les gros Diesel lents, un allégement considérable.

**Revendications**

1. Moteur alternatif à combustion interne comportant au moins un piston (4), un cylindre (2) et une culasse (3) délimitant une chambre de combustion (1), la tête dudit piston comportant une partie saillante (5), ladite partie saillante étant conformée de manière à comporter deux portions de surface (5a, 5b) éloignées de la surface interne (3a) de la culasse (3) et une troisième portion de surface (5c) voisine de la surface interne de la culasse lorsque le piston (4) est au point mort haut, ladite troisième portion (5c) de surface comportant une zone (5d) distante de la surface interne de la culasse formant une surface de liaison desdites deux premières portions (5a, 5b) ces dernières déterminant avec la culasse (3) respectivement, une zone de combustion initiale (6) et une zone de détente (7) des gaz issus de la combustion, tandis que ladite zone (5d) de liaison forme avec la culasse un orifice de passage (8) desdits gaz de la première à la seconde zone guidant ces derniers le long de la culasse suivant une paroi de la zone de détente, ladite zone (5d) formant une surface de liaison étant située à la base de la partie saillante (5) et à sa périphérie, caractérisé en ce que la portion (5b) de surface de la partie saillante orientée vers la zone de détente est une surface cylindrique présentant une concavité dirigée vers l'intérieur de ladite zone de détente, formant un moyen générateur d'une turbulence rotative en direction de l'orifice (8), d'axe sensiblement parallèle à l'axe du cylindre.

2. Moteur alternatif à combustion interne comportant au moins un piston (4), un cylindre (2) et une culasse (3) délimitant une chambre de combustion (1), la tête dudit piston comportant une partie saillante (5), ladite partie saillante étant conformée de manière à comporter deux portions de surface (5a, 5b) éloignées de la surface interne (3a) de la culasse (3) et une troisième portion de surface (5c) voisine de la surface interne de la culasse lorsque le piston (4) est au point mort haut, ladite troisième portion (5c) de surface comportant une zone (5d) distante de la surface interne de la culasse formant une surface de liaison desdites deux premières portions (5a, 5b) ces dernières déterminant avec la culasse (3) respectivement, une zone de combustion initiale (6) et une zone de détente (7) des gaz issus de la combustion, tandis que ladite zone (5d) de liaison forme avec la culasse un orifice de passage (8) desdits gaz de la première à la seconde zone guidant ces derniers le long de la culasse suivant une paroi de la zone de détente, caractérisé en ce ladite zone (5d) formant une surface de liaison est située au sommet de la partie saillante (5) dans un plan sensiblement axial du cylindre, et en ce que la portion (5b) de surface de la partie saillante orientée vers la zone de détente présente une concavité dirigée vers l'intérieur de ladite zone de détente, formant un moyen générateur d'une turbulence rotative se refermant au voisinage dudit passage (8), cette turbulence étant d'axe sensiblement perpendiculaire au plan contenant sensiblement l'axe du cylindre et l'axe du passage.

3. Moteur selon l'une des revendications 1 ou 2 dans lequel le mélange combustible est totalement admis dans la chambre avant le début de la combustion et qui comporte un organe d'allumage ponctuel (9), caractérisé, en ce que ledit organe d'allumage (9) est placé dans ladite zone initiale (6) de combustion au plus loin de ladite zone de liaison (5d) formant ledit orifice.

4. Moteur selon l'une des revendications 1 ou 2 du type Diesel, dans lequel au moins la fin de l'admission de partie saillante est concomitante au début de la combustion, caractérisé en ce que la partie de la zone de combustion (6) voisine de la zone (5d) susdite formant surface de liaison est située au voisinage de la soupape d'échappement (10) et en ce que l'admission par injecteur (12) est orientée en direction de cette soupape (10).

5. Moteur selon la revendication 4, caractérisé en ce que le jet de combustible est divisé en une partie faible dirigée vers ladite soupape et une partie importante le long de la surface de la zone de combustion formée sur la saillie du piston.

6. Moteur selon la revendication 5, caractérisé en ce que cette division est réalisée par le piston (4) lors de sa course précédant le point mort haut.

7. Moteur selon la revendication 5, caractérisé en ce que cette division est réalisée par deux jets d'injection séparés de débits différents.

8. Moteur selon l'une quelconque des revendications 4 à 7, caractérisé en ce qu'il comporte un organe d'allumage (13) dans la zone de combustion initiale au voisinage de la zone de liaison.

## Claims

1. Internal combustion engine of the reciprocating type comprising at least a piston (4), a cylinder (2) and a cylinder head (3) defining a combustion chamber (1), the head of said piston comprising a projecting part (5), said projecting part being shaped in such a way as to comprise two portions of surface (5a, 5b) situated at a distance from the internal surface (3a) of the cylinder head (3) and a third portion of surface (5c) close to the internal surface of the cylinder head when the piston (4) is in high neutral gear, said third portion (5c) or surface comprising a zone (5d) which is at a distance from the internal surface of the cylinder head forming a surface joining said two first portions (5a, 5b), both of which portions define with the cylinder head (3), respectively, an initial combustion zone (6) and an expansion zone (7) for the gases produced by the combustion, whereas said joining zone (5d) forms with the cylinder head, an orifice (8) for the passage of said gases from the first zone into the second zone guiding them along the cylinder head and along a wall of the expansion zone, said zone (5d) forming a joining surface being situated at the base of the projecting part (5) and on its periphery, characterized in that the portion (5b) of surface of the projecting part facing towards the expansion zone is a cylindrical surface whose concavity is directed inwardly of said expansion zone, forming a means of generating a rotating turbulence in the direction of orifice (8), of axis substantially parallel to the cylinder axis.

2. Internal combustion engine of the reciprocating type comprising at least a piston (4), a cylinder (2) and a cylinder head (3) defining a combustion chamber (1), the head of said piston comprising a projecting part (5), said projecting part being shaped in such a way as to comprise two portions of surface (5a, 5b) which are at a distance from the internal surface (3a) of the cylinder head (3) and a third portion of surface (5c) close to the internal surface of the cylinder head when the piston (4) is in high neutral gear, said third portion (5c) of surface comprising a zone (5d) situated at a distance from the internal surface of the cylinder head forming a surface joining said two first portions (5a, 5b), both of which portions define with the cylinder head, respectively, an initial combustion zone (6) and an expansion zone (7) for the gases produced by the combustion, whereas said joining zone (5d) forms with the cylinder head an orifice (8) for the passage of said gases from the first zone into the second zone guiding them along the cylinder head and along a wall of the expansion zone, characterized in that said zone (5d) forming a joining surface is situated at the top part of the projecting part (5) inside a substantially axial plane of the cylinder, and in that the portion (5b) of surface of the projecting part which is facing towards the expansion zone has a concavity directly inwardly of said expansion zone, forming a means of generating a rotating turbulence which closes in near said passage (8), said turbulence being of axis substantially perpendicular to the plane containing substantially the axis of the cylinder and the axis of the passage.

3. Engine according to one of claims 1 or 2, in which the totality of the fuel mixture is admitted into the chamber before the beginning of the combustion and which comprises a punctual ignition member (9), characterized in that said ignition member (9) is placed in said initial zone (6) of combustion farthest from said joining zone (5d) forming said orifice.

4. Engine according to one of claims 1 or 2, of the Diesel type, in which at least the end of the fuel admission is concomitant with the beginning of the combustion, characterized in that the part of the combustion zone (6) which is close to said zone (5d) forming joining surface is situated in the vicinity of the exhaust valve (10) and in that the admission through injector (12) is directed towards said valve (10).

5. Engine according to claim 4, characterized in that the jet of fuel is divided into a weak part directed towards said valve and a strong part along the surface of the combustion zone formed on the projecting part of the piston.

6. Engine according to claim 5, characterized in that said division is carried out by the piston (4) during its stroke preceding the high neutral gear.

7. Engine according to claim 5, characterized in that said division is carried out by two separate injection jets of different flowing rate.

8. Engine according to any one of claims 4 to 7, characterized in that it comprises an ignition member (13) in the initial combustion zone close to the joining zone.

**Patentansprüche**

1. Hubkolbenbrennkraftmaschine, mit wenigstens einem Kolbem (4), einem Zylinder (2) und einem eine Brennkammer (1) begrenzenden Zylinderkopf (3), wobei der Kopf des Kolbens einen überstehenden Abschnitt (5) aufweist, wobei der überstehende Abschnitt so ausgebildet ist, dass er zwei von der Innenfläche (3a) des Zylinderkopfs (3) entfernte Oberflächenbereiche (5a, 5b) und einen dritten der Innenfläche des Zylinderkopfs benachbarten Oberflächenbereiche (5c) aufweist, wenn sich der Kolben (4) im oberen Totpunkt befindet, wobei der dritte Oberflächenbereiche (5c) eine von der Innenfläche des Zylinderkopfs entfernte Zone (5d) aufweist, die eine Verbindungsfläche der beiden ersteren Bereiche (5a, 5b) bildet, die mit dem Zylinderkopf (3) eine Initialverbrennungszone (6) bzw. eine Entspannungszone (7) für die aus der Verbrennung stammenden Gase bilden, während die Verbindungszone (5d) mit dem Zylinderkopf eine Öffnung (8) für einen Durchtritt der Gase von der ersten in die zweite Zone bildet, die diese letzteren längs des Zylinderkopfs an einer Wand der Entspannungszone führt, wobei die eine Verbindungsfläche bildende Zone (5d) am Boden des überstehenden Abschnitts (5) und an seinem Umfang ausgebildet ist, dadurch gekennzeichnet, dass der Oberflächenbereich (5b) des zur Entspannungszone gerichteten überstehenden Abschnitts eine zylindrische Fläche ist, die eine in das Innere der genannten Entspannungszone gerichtete Konkavität aufweist, die eine Erzeugungseinrichtung einer rotierenden Wirbelströmung in Richtung der Öffnung (8) bildet, mit einer im wesentlichen zur Achse des Zylinders parallelen Achse.

2. Hubkolbenbrennkraftmaschine, mit wenigstens einem Kolben (4), einem Zylinder (2) und einem eine Brennkammer (1) begrenzenden Zylinderkopf (3), wobei der Kopf des Kolbens einen überstehenden Abschnitt (5) aufweist, wobei der überstehende Abschnitt so ausgebildet ist, dass er zwei von der Innenfläche (3a) des Zylinderkopfs (3) entfernte Oberflächenbereiche (5a, 5b) und einen dritten der Innenfläche des Zylinderkopfs benachbarten Oberflächenbereich (5c) aufweist, wenn sich der Kolben (4) im oberen Totpunkt befindet, wobei der dritte Oberflächenbereich (5c) eine von der Innenfläche des Zylinderkopfs entfernte Zone (5d) aufweist, die eine Verbindungsfläche der beiden ersteren Bereiche (5a, 5b) bildet, wobei letztere mit dem Zylinderkopf (3) eine Initialverbrennungszone (6) bzw. eine Entspannungszone (7) für die aus der Verbrennung stammenden Gase bilden, während die genannte Verbindungszone (5d) mit dem Zylinderkopf eine Öffnung (8) für den Durchtritt der genannten Gase von der ersten Zone zur zweiten Zone bildet, welche diese letzteren entlang des Zylinderkopfs an einer Wand der Entspannungszone führt, dadurch gekennzeichnet, dass die eine Verbindungsfläche bildende genannte Zone (5d) an der Spitze des überstehenden Abschnitts (5) in einer Ebene im wesentlichen axial zum Zylinder angeordnet ist, und dass der Oberflächenbereich (5b) des zur Entspannungszone ausgerichteten überstehenden Abschnitts eine Konkavität aufweist, die in das Innere der genannten Entspannungszone gerichtet ist, wobei eine Erzeugungseinrichtung einer rotierenden Wirbelströmung gebildet wird, die sich in der Nähe der genannten Passage (8) erneut schliesst, wobei die Wirbelströmung eine Achse aufweist, die im wesentlichen senkrecht zur Ebene ist, die im wesentlichen die Achse des Zylinders und die Achse der Passage aufweist.

3. Motor nach einem der Ansprüche 1 oder 2, bei dem das brennbare Gemisch vor dem Brennbeginn vollständig in die Kammer eingeführt ist und der ein Punktzündgerät (9) aufweist, dadurch gekennzeichnet, dass das Zündgerät (9) in der Initialverbrennungszone (6) soweit wie möglich entfernt von der die genannte Öffnung bildenden Verbindungszone (5d) angeordnet ist.

4. Motor nach Anspruch 1 oder 2, in Dieselbauart, bei dem wenigstens das Einlassende des Kraftstoffs mit dem Brennbeginn zusammenfällt, dadurch gekennzeichnet, dass der Teil der Verbrennungszone (6), der der genannten die Verbindungsfläche bildenden Zone (5d) benachbart ist, sich in der Nähe des Auslassventils (10) befindet, und dass der Einlass durch die Einspritzdüse (12) in Richtung dieses Ventils (10) erfolgt.

5. Motor nach Anspruch 4, dadurch gekennzeichnet, dass der Kraftstoffstrahl aufgeteilt ist in einen zum genannten Ventil gerichteten schwachen Teil und in einen starken Teil entlang der Oberfläche der auf dem Vorsprung des Kolbens gebildeten Verbrennungszone.

6. Motor nach Anspruch 5, dadurch gekennzeichnet, dass diese Aufteilung durch den Kolben (4) während dessen dem oberen Totpunkt vorangehenden Hubs erfolgt.

7. Motor nach Anspruch 5, dadurch gekennzeichnet, dass diese Aufteilung durch zwei gesonderte Einspritzstrahlen mit unterschiedlichen Durchsatzmengen erfolgt.

8. Motor nach einem der Ansprüche 4 bis 7, dadurch gekennzeichnet, dass er ein Zündgerät (13) in der Initialverbrennungszone in der Nähe der Verbindungszone aufweist.

Fig.1A

Fig.1B

Fig.1C

Fiq-2A

Fiq-2B

Fig_3A

6  13  8

12

10

5d

5a

3B  3B

7

Fig_3B

3  5c  13  10  5b  3d

7

2

5

4